Europäisches Patentamt

**European Patent Office**

**Office européen des brevets**

(19)

(11) Publication number: **0 053 467**
A1

# (12) EUROPEAN PATENT APPLICATION

(21) Application number: **81305527.4**

(22) Date of filing: **24.11.81**

(51) Int. Cl.³: **F 16 B 33/04,** F 16 B 31/00°

(30) Priority: **28.11.80 GB 8038222**
**07.03.81 GB 8107204**

(43) Date of publication of application: **09.06.82**
**Bulletin 82/23**

(84) Designated Contracting States: **DE FR GB**

(71) Applicant: **STRESS ANALYSIS LIMITED, The Grange**
**Packhorse Road, Melbourne Derbyshire, DE7 1EG (GB)**

(72) Inventor: **Whitehead, Philip Steven, Dr., 6 New Street,**
**Kegworth Derby (GB)**
Inventor: **Perla, Miroslav, Dr., The Grange Pack Horse**
**Road, Melbourne Derbyshire (GB)**

(74) Representative: **Loven, Keith James et ai, Eric Potter &**
**Clarkson 14 Oxford Street, Nottingham NG1 5BP (GB)**

(54) **Fastening.**

(57) The maximum tensile load to which a bolt or stud in a threaded socket or in a nut can be subjected is substantially increased by adopting a thread profile which gives a diameter above the straight line of a uniform decrease for approximately the first third of the engaged thread length, moving from the free end (4) of the threaded shank, and then a diameter generally below the straight line for the remainder of the thread length.

FASTENING

This invention relates to a fastening, for example a bolt or stud with a nut or threaded socket or bore in a body, and to a bolt or stud suitable for use under tensile stress.

One application for bolts or studs under high tensile stress is in the securing of cylinder heads in internal combustion engines, where the bolts or studs are required to resist the stresses generated by the repeated explosions within the cylinders.  When securing the cylinder head to a cylinder block of an engine, the studs or bolts are pre-stressed to a predetermined level by tightening the securing nuts on the studs, or the bolts themselves, to a corresponding torque setting.  The numbers and sizes of the bolts or studs have to be as small as possible in order to avoid increasing the size of the block and the cylinder head to accommodate them, since increasing the size of the engine will increase the weight of the vehicle and so reduce its performance.  If more power is required from the engine, an increase in the compression ratio may be necessary, and this in turn will increase the tensile stresses in the securing bolts or studs when the engine is running.

For these reasons, it will be seen that each bolt or stud is desirably subjected to as high a tensile load as is allowed by the tensile strength of the bolt or stud.

The practice of reducing the external diameter of a portion of the thread on a bolt or stud in order to distribute stress more evenly and permit a higher loading, is known from German Patent Specification No: 686521, Swiss Patent Specification No: 226987 and United States Patent Specification No: 4189975.  In each case, however, a portion of the thread is simply progressively reduced in external diameter at a uniform rate.

It has now been found that a further increase in the tensile load to which a bolt or stud can be subjected can be achieved by adopting a thread external profile which gives a diameter above the straight line of the uniform decrease for approximately the first third of the engaged thread from the free end of the shank, and then a diameter slightly below the straight line for the remainder of the thread length.

According to one aspect of the invention, there is provided a fastening comprising a first member having therein or therethrough a screw-threaded socket or bore, and a second member having a screw-threaded shank engageable with the thread in the socket or bore, wherein one or both threads is or are so formed that the area of engagement between the thread on the shank and the thread in the socket or bore decreases along the threads towards the second member, characterised in that the area of engagement over approximately the first third of the engaged threaded length from the end thereof remote from the second member is constant or at least greater than that given by a uniform decrease in engagement along the whole of the engaged threaded length, and in that the area of engagement over the remainder of the engaged threaded length decreases towards said second member and is smaller than that given by a uniform decrease over said remainder.

According to a second aspect of the invention there is a provided a fastening comprising a first member having therein or therethrough a screw-threaded socket or bore, and a second member having a screw-threaded shank engageable with the thread in the socket or bore, characterised in that one or both threads is or are so formed that the area of engagement between the thread on the shank and the thread in the socket or bore is substantially constant for approximately the first third of the axial length of the engaged threads in a direction from the ends thereof remote from the second member towards the second member, in that said area of engagement decreases over the remaining portion of said axial length to a minimum at the ends of the engaged threads adjacent to the second member, and in that the rate of decrease of the area of engagement over the remaining portion decreases towards the second member.

Since internal or female threads have generally to be formed by cutting, whereas external or male threads may be formed by the simpler manufacturing procedure of rolling, it may be preferable to effect the decrease in engagement area by forming the thread on the shank such that the inner thread diameter is substantially constant and the outer thread diameter is decreased.

The invention also provides a screw-threaded bolt or stud for engagement with a screw-threaded socket or bore, characterised in that the screw-thread on the bolt or stud has a uniform inner or core diameter and an external diameter which over approximately the first third of the engaged threaded length from the free end thereof is constant or at least greater than that given by a uniform decrease in thread external diameter along the whole of the engaged thread length, and in that the thread external diameter over the remainder of the engaged threaded length decreases in a direction from the free end thereof inwardly of the bolt or stud and is less than that given by a uniform decrease over said remainder.

The fastening and the bolt or stud of the invention can be subjected to a higher tensile load than a conventional fastening of similar overall dimensions and materials, and higher than a fastening in which a linear reduction in thread contact area along the length is present. An increase in maximum tensile load of 50% to 60% can be achieved in comparison with a conventional fastening.

Reference is now made to the drawings, in which:

Figure 1 is a longitudinal cross-section through the threaded end portion of a bolt or stud in accordance with the invention engaged in a uniformly threaded bore.

Figure 2 is a graph representing the nominal thread outer diameter as a function of engaged length of a preferred bolt or stud in accordance with the invention; and

Figure 3 is a longitudinal cross-section through the threaded end portion of an alternative bolt or stud engaged in a uniformly threaded nut.

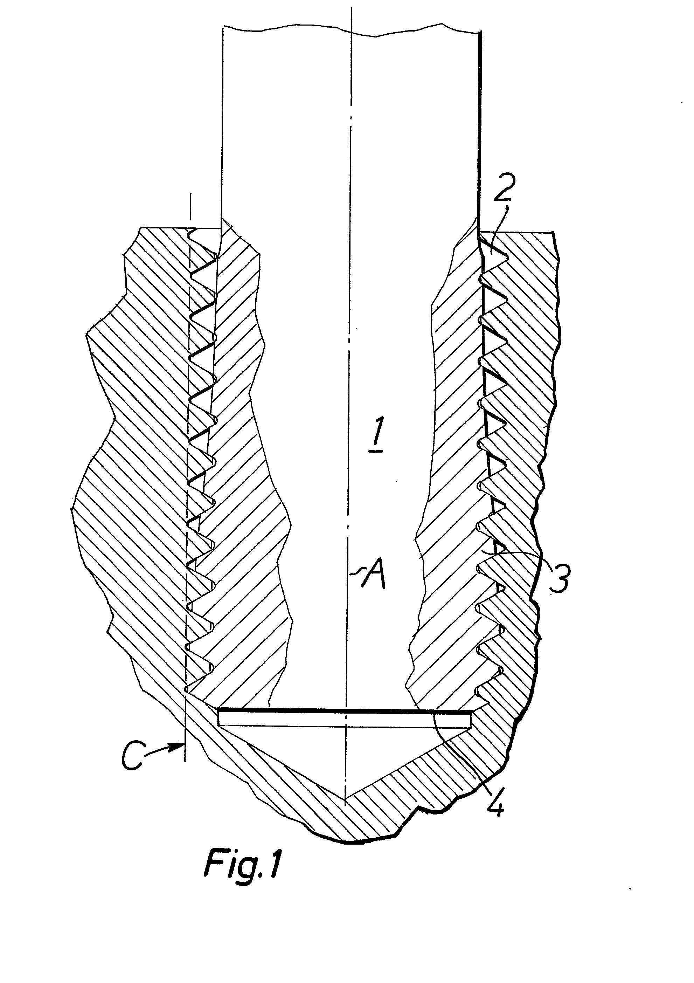

Referring first to Figure 1, the bolt or stud has a threaded portion 1, the whole of which in use is engaged with the internal thread in a bore 2 in for example, an engine cylinder block. The outer profile of a conventional screw

thread is indicated by a straight line C parallel to the longitudinal axis A of the bolt or stud and which follows the outermost points of the thread.

The thread 3 formed on the bolt or stud follows the form of a conventional thread, but the outermost parts of the thread are removed relative to the conventional thread to form an outer profile which is generally tapering inwardly from a maximum at the free end 4 of the bolt to a minimum at the opposite end of the threaded portion 1. Over approximately the first third of the engaged thread length, moving from the free end 4, the external thread diameter is greater than would be provided by a linear decrease along the whole engaged length, while for the remainder of the thread, the external diameter is generally less than that provided by a linear decrease.

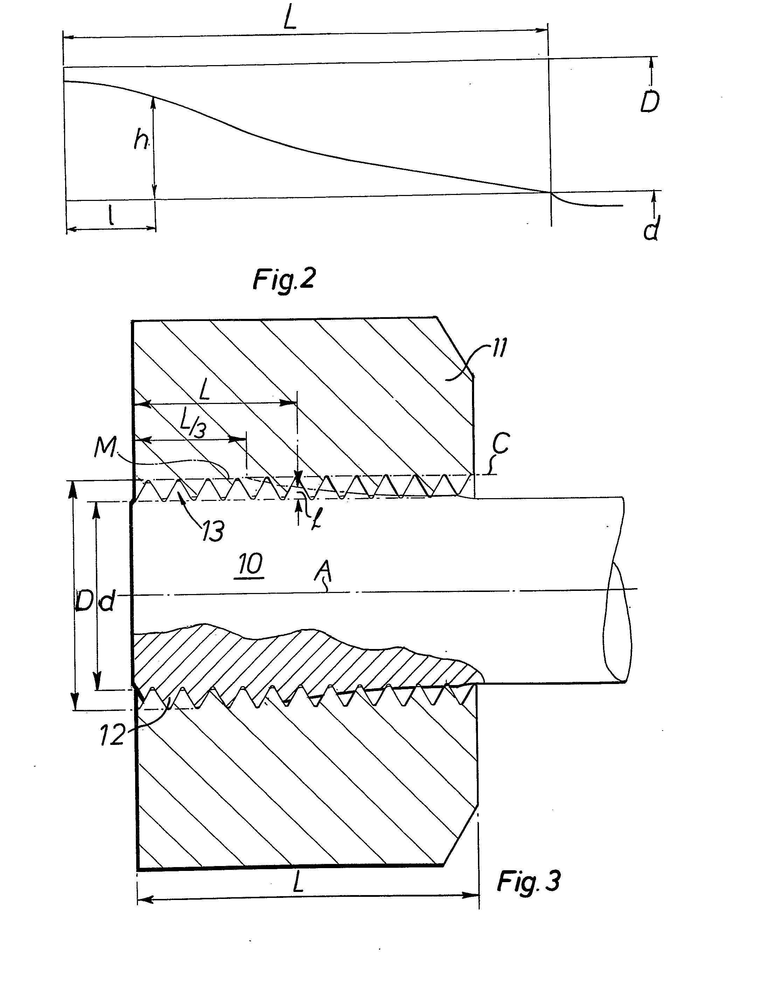

Figure 2 illustrates the precise form of a particularly useful outer profile applicable, for example, in the stud or bolt of Figure 1. In the graph L is the engaged length of the thread, h is the distance from the root of the thread to its outermost edge at any point, l is the distance from the start of the engaged length L adjacent to the free end of the bolt or stud, D is the nominal thread outer diameter for the conventional thread upon which the modified profile is based, and d is the core diameter.

Table 1 gives as percentages co-ordinates from which the curve illustrated in Figure 2 can be constructed.

TABLE 1 : PERCENTAGE CO-ORDINATES FOR THREAD OUTER PROFILE

| $l/L$ % | 0 | 5 | 10 | 15 | 20 | 25 | 30 | 35 | 40 | 45 | 50 | 55 | 60 | 65 | 70 | 75 | 80 | 85 | 90 | 95 | 100 |
|---|---|---|---|---|---|---|---|---|---|---|---|---|---|---|---|---|---|---|---|---|---|
| $\frac{2h}{D-d}$ % | 89 | 87 | 84 | 80 | 75 | 68 | 60 | 52 | 45 | 39 | 34 | 30 | 25 | 22 | 18 | 15 | 12 | 9 | 6 | 3 | 0 |

A stress analysis of a bolt having the thread outer profile defined was carried out using three-dimensional frozen stress photoelasticity in the conventional manner. The bolt was screwed into a nut having a conventional internal thread corresponding to the original conventional thread on the bolt. The analysis indicated that the tensile load at which failure would occur would be approximately 60% higher than for a conventional bolt in the same type of nut.

Referring now to Figure 3, the bolt or stud has a threaded portion 10, the whole of which in use, is engaged with the internal thread in a uniformly threaded nut 11. The outer profile of a conventional screw-thread is indicated by a straight line C parallel to the longitudinal axis A of the bolt and studs.

The thread 12 formed on the bolt or stud follows the form of a conventional thread for the first third 13 of its length, from the free end, but over the remainder of the thread length the outermost parts of the thread are removed relative to the conventional thread to form an outer profile M which is concave and forms part of the circumference of a circle and runs from a maximum thread height at the end of the first third 13 of the bolt to a minimum on the opposite end of the threaded portion 10.

In Figure 3, L is the engaged length of the thread, h is the distance from the roots of the thread to its outermost edge at any point, l is the distance from the start of the engaged length L adjacent to the free end of the bolt or stud, D is the nominal thread outer diameter for the conventional thread upon which the modified profile is based, and d is the core diameter.

Table 2 gives as percentages co-ordinates from which the thread outer profile illustrated in Figure 3 can be constructed.

TABLE 2 : PERCENTAGE CO-ORDINATES FOR THREAD OUTER PROFILE

| $\frac{l}{L}$ % | 0 | 5 | 10 | 15 | 20 | 25 | 30 | 35 | 40 | 45 | 50 | 55 | 60 | 65 | 70 | 75 | 80 | 85 | 90 | 95 | 100 |
|---|---|---|---|---|---|---|---|---|---|---|---|---|---|---|---|---|---|---|---|---|---|
| $\frac{2h}{D-d}$ % | 100 | 100 | 100 | 100 | 100 | 100 | 100 | 89 | 65 | 50 | 39 | 30 | 23 | 18 | 13 | 9 | 6 | 3 | 2 | 1 | 0 |

A stress analysis of a bolt having the thread outer profile defined was carried out using three-dimensional frozen stress photoelasticity in the conventional manner. The bolt was screwed into a nut having a conventional internal thread corresponding to the original conventional thread on the bolt. The analysis indicated that the tensile load at which failure would occur would be at least 60% higher than for a conventional bolt in the same type of nut.

CLAIMS

1.    A fastening comprising a first member having therein or therethrough a screw-threaded socket or bore (2), and a second member having a screw-threaded shank (1) engageable with the thread in the socket or bore, wherein one or both threads is or are so formed that the area of engagement between the thread on the shank and the thread in the socket or bore decreases along the threads towards the second member, characterised in that the area of engagement over approximately the first third of the engaged threaded length from the end thereof remote from the second member is constant or at least greater than that given by a uniform decrease in engagement along the whole of the engaged threaded length, and in that the area of engagement over the remainder of the engaged threaded length decreases towards said second member and is smaller than that given by a uniform decrease over said remainder.

2.    A fastening comprising a first member having therein or therethrough a screw-threaded socket or bore (2), and a second member having a screw-threaded shank (1) engageable with the thread in the socket or bore, characterised in that one or both threads is or are so formed that the area of engagement between the thread on the shank and the thread in the socket or bore is substantially constant for approximately the first third of the axial length of the engaged threads in a direction from the ends thereof remote from the second member towards the second member, in that said area of engagement decreases over the remaining portion of said axial length to a minimum at the ends of the engaged threads adjacent to the second member, and in that the rate of decrease of the area of engagement over the remaining portion decreases towards the second member.

3.    A fastening according to Claim 1 or 2, characterised in that the inner thread diameter (d) on the shank is substantially constant.

4. A fastening according to Claim 2, characterised in that the inner thread diameter (d) and the diameter of the unthreaded part of the shank are substantially equal.

5. A screw-threaded bolt or stud for engagement with a screw-threaded socket or bore, characterised in that the screw-thread on the bolt or stud has a uniform inner or core diameter (d) and an external diameter (D) which over approximately the first third of the engaged threaded length from the free end thereof is constant or at greater than that given by a uniform decrease in thread external diameter along the whole of the engaged thread length, and in that the thread external diameter over the remainder of the engaged threaded length decreases in a direction from the free end thereof inwardly of the bolt or stud and is less than that given by a uniform decrease over said remainder.

6. A screw-threaded bolt or stud for engagement with a screw-threaded socket or bore characterised in that the screw-thread (13) on the bolt or stud has a uniform inner or core diameter (d) and an external diameter (D) which is substantially constant for approximately the first third of the axial length of the thread in a direction from the free end thereof inwardly of the bolt or stud and which decreases over the remaining portion of said axial length to a minimum at the end of the thread remote from said free end, and in that the rate of decrease of the external diameter over the remaining portion decreases towards said end remote from said free end.

Fig.1

$\frac{2}{2}$

Fig.2

Fig. 3

European Patent Office

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| D,X | <u>DE - C - 686 521</u> (E. DAIBER) <br><br> * page 1, lines 53-60; page 2, lines 29-34; figure 1 * | 1-6 |

**CLASSIFICATION OF THE APPLICATION (Int. Cl. ³)**

F 16 B 33/04
31/00

**TECHNICAL FIELDS SEARCHED (Int.Cl.³)**

F 16 B

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18-02-1982 | MOET |

EPO Form 1503.1  06.78